# EUROPEAN PATENT SPECIFICATION

(11) **EP 1 172 340 B1**
(45) Date of publication and mention of the grant of the patent: **19.05.2004**
(21) Application number: 01116926.5
(22) Date of filing: 11.07.2001
(51) Int. Cl.: C03C 3/091, C03C 3/093

(54) **Alkali free glass**
Alkalifreies Glas
Verre exempt de métaux alcalins

(30) Priority: 13.07.2000 KR 2000040265
(43) Date of publication of application: 16.01.2002
(73) Proprietor: Hankuk Electric Glass Co., Ltd., Gumi city, Kyoungsangbuk-do (KR)
(72) Inventor: Park, Hyun-chui, Wonho Jumbo Town#107-1001, Gumi city, Kyoungsangbuk-do (KR); Hwang, Chan-yun, Mikwang Hannuri Town #203-1302, Gumi city, Kyoungsangbuk-do (KR)
(74) Representative: Grünecker, Kinkeldey, Stockmair & Schwanhäusser Anwaltssozietät

(56) References cited:
- EP-A- 0 714 862
- US-A- 5 811 361
- US-A- 5 851 939
- PATENT ABSTRACTS OF JAPAN vol. 2000, no. 09, 13 October 2000 (2000-10-13) & JP 2000 159541 A (NIPPON ELECTRIC GLASS CO LTD), 13 June 2000 (2000-06-13)

## Description

### BACKGROUND OF THE INVENTION

### Field of the Invention

The present invention relates in general to alkali free glass, and more particularly, to alkali free glass available for use in various kinds of displaying devices including a TFT-LCD and a photo mask.

### Description of the Related Art

Generally glass used for a television set and a computer system etc. may include glass for a cathode ray tube (CRT) and glass for a thin film transfer-liquid crystal display (TFT-LCD) and a photo mask and include glass substrates for a variety of displaying devices. Melted glass called "glass gob" goes through compression and molding processes into performs and then manufactured into final products through grinding and inspection processes.

Recently, glass for a TFT-LCD and a photo mask that have been developed extensively and actively is manufactured under predetermined conditions different from the conventional glass for a CRT. The conditions are as follows.

First, glass for a TFT-LCD and a photo mask should not substantially contain alkali metallic oxides. Where a metallic oxide thin film is formed on a glass surface, alkali metal ions are infiltrated into the thin film, thereby deteriorating the properties of the film and causing a deformation of the glass surface.

Second, in order to minimize the deformation of the glass surface when the thin film is formed, it is required that glass for the TFT-LCD and the photo mask has a comparatively high strain point of temperature.

Third, glass for the TFT-LCD and the photo mask should have a chemical resistance sufficiently to resist against a variety of chemicals.

Further, according as there is a growing demand for integrated products, glass for the TFT-LCD and the photo mask need to be lower in density and thinner in thickness. Also, a coefficient of thermal expansion is requested to be comparatively low, so as to secure a thermal resistance.

However, conventional glass for the TFT-LCD and the photo mask has the strain point of 593°C, which is relatively low; the density and the coefficient of thermal expansion are respectively 2.76g/cm³, 47 x 10⁻⁷/°C, which are relatively high. Therefore, they are not appropriate for glass for the TFT-LCD and the photo mask.

Meanwhile, the glass disclosed in U.S. Patent. No. 4,824,808 is designed for use in the TFT-LCD, but it is not suitable for glass for the TFT-LCD and the photo mask since the strain point thereof is below 650°C, that is, relatively low. The glass disclosed in U.S. Patent. No. 5,116,787 is not suitable for glass for the TFT-LCD and the photo mask since the coefficient of thermal expansion is above 40-50x10⁻⁷/°C, that is, relatively high though the strain point thereof is above 655°C.

### Summary of the Invention

Accordingly, the present invention has been made keeping in mind the above problems occurring in the prior art, and an object of the present invention is to provide an alkali free glass for use in various kinds of displaying devices including a TFT-LCD and a photo mask.

In order to achieve the above object, the present invention provides alkali free glass comprised, in weight percent, of about 57-61% SiO₂, 16-18% Al₂O₃, 8-11% B₂O₃, 3-4.5% CaO, 1-5% SrO, 5-8% BaO, 0.1-3% ZnO, being substantially free from alkali metallic oxides and MgO.

Preferably, an alkali free grass has properties of a strain point 660°C or more, a coefficient of thermal expansion 38 X 10⁻⁷/°C or less, and a density 2.6g/cm³ or less.

The present invention will be better understood and its various objects and advantages will be more fully appreciated from the following description.

Alkali free glass according to the present invention is comprised, in weight percent, of about 57-61% SiO₂, 16-18% Al₂O₃, 8-11% B₂O₃, 3-4.5% CaO, 1-5% SrO, 5-8% BaO, 0.1-3% ZnO. Also, the glass is substantially free from alkali metallic oxides and MgO.

The following description is given to the properties and contents of the ingredients contained in the alkali free glass according to the present invention.

SiO₂ functions as a network former, in the alkali free glass according to the present invention. Here, if the content of SiO₂ is less than 57%, the density and the coefficient of thermal expansion are increased, being not appropriate, whereas if the content of SiO₂ is higher than 61%, the glass has such a high temperature viscosity to deteriorate the melting properties thereof and may generate devitrification at the same time. Therefore, it is appropriate for the glass to have 57% to 61% of SiO₂.

Al₂O₃ is an ingredient for increasing thermal resistance by maintaining a comparatively high strain point in the glass. If the content of Al₂O₃ in the alkali free glass is less than 16%, the above effect of increasing the thermal resistance, is decreased significantly, whereas if the content thereof is higher than 18%, the glass has such a high temperature viscosity to deteriorate the melting properties thereof and may generate devitrification at the same time. Therefore, it is appropriate for the glass to have 16% to 18% of Al₂O₃.

B₂O₃ serves as a flux, to facilitate the melting of the glass. If the content of B₂O₃ is less than 8%, the melting facilitating effect is decreased significantly, whereas if the content thereof is higher than 11%, the strain point thereof is lowered to deteriorate the thermal resistance thereof.

CaO is an ingredient for facilitating the melting of the glass by lowering the high temperature viscosity thereof. If the content of CaO is less than 3%, the above-mentioned effect is decreased significantly, whereas if the content thereof is higher than 4.5%, the coefficient of thereof tends to increase.

SrO is an ingredient functioning similar to CaO. If the content of SrO is less than 1%, the above-mentioned effect is significantly decreased, whereas if the content thereof is higher than 5%, the thermal resistance and the density thereof tend to increase.

BaO is an ingredient functioning similar to SrO. If the content of BaO is higher than 8%, the density and the thermal resistance tend to increase. Further, if the glass contains higher than 3% of ZnO, the density and the thermal resistance thereof tend to increase. Therefore, it is appropriate for the glass to have 5% to 8% of BaO and 0.1% to 3% of ZnO.

The alkali free glass containing the above-described ingredients was found to have a strain point of 660°C or more, a coefficient of thermal expansion of 38 X 10⁻⁷/°C or less, and a density of 2.6g/cm³ or less. Therefore, it becomes very appropriate for glass for the TFT-LCD and the photo mask. In addition, the alkali free glass according to the present invention may further contain a refining agent such as As₂O₃, Sb₂O₃, Cl₂, SO₃, etc., to increase a refining effect.

Table 1 below sets forth experimental examples of the glass according to the present invention.

**[Table 1]**

| Sample. | 1 | 2 | 3 | 4 | 5 | 6 | 7 |
|---|---|---|---|---|---|---|---|
| SiO₂ | 57.0 | 61.0 | 57.0 | 58.0 | 61.0 | 57.0 | 55.0 |
| Al₂O₃ | 17.5 | 16.0 | 17.0 | 17.5 | 18.0 | 17.5 | 19.0 |
| B₂O₃ | 9.0 | 11.0 | 8.5 | 10.0 | 8.0 | 8.0 | 8.0 |
| CaO | 3.5 | 4.5 | 4.0 | 3.0 | 3.0 | 3.0 | 5.0 |
| SrO | 3.0 | 2.0 | 5.0 | 4.0 | 1.0 | 7.0 | 2.0 |
| BaO | 7.0 | 5.0 | 5.0 | 6.0 | 8.0 | 6.0 | 10.0 |
| ZnO | 2.0 | 0.5 | 3.0 | 1.0 | 0.5 | 1.0 | 0.5 |
| Density (g/cm³) | 2.55 | 2.45 | 2.57 | 2.53 | 2.51 | 2.61 | 2.61 |
| Thermal expansion coefficient (x10⁻⁷/°C) | 35 | 34 | 37 | 36 | 33 | 44 | 42 |
| Strain point | 673 | 661 | 663 | 673 | 694 | 675 | 677 |
| (unit: in weight percent) | | | | | | | |

Samples 1 to 5 indicate examples of the glass according to the present invention, and samples 6 to 7 indicate comparative examples.

In Sample 6, the content of SrO is 7%, being beyond the range of SrO in the glass according to the present invention.

Sample 7 contains SiO₂ 55.0%, Al₂O₃ 19.0%, CaO 5.0% and BaO 10.0%, being beyond the range of ingredients in the glass according to the present invention.

The samples 1 to 7 were manufactured by putting the ingredients in Table 1 into a platinum crucible, and melting them in the a electric furnace at about 1700°C for about 6 hours, and then forming the melted glass into a glass slab using a carbon plate.

After being cooled slowly, the density, the coefficient of thermal expansion and the strain point of the glass slab were measured.

As is evident from the experimental results in Table 1, the respective samples 1 to 5 exhibit strain points of above 660°C, coefficients of thermal expansion of below 38 X 10⁻⁷/°C, and densities of below 2.6g/cm³. Therefore, the samples 1 to 5 have excellent properties as alkali free glass, and are suitable glass for the TFT-LCD and the photo mask.

However, the comparative samples 6 and 7 are not adequate for glass for the TFT-LCD and the photo mask, because of comparatively high densities and coefficients of thermal expansion.

As described above, the glass according to the present invention is comprised, in weight percent, of about 57-61% SiO₂, 16-18% Al₂O₃, 8-11% B₂O₃, 3-4.5% CaO, 1-5% SrO, 5-8% BaO, 0.1-3% ZnO, being substantially free from alkali metallic oxides and MgO, thereby exhibiting excellent properties as alkali free glass.

Therefore, the alkali free glass according to the present invention is suitable for glass for the TFT-LCD and the photo mask, and may be used for glass substrates for various kinds of display devices.

Although the preferred embodiments of the present invention have been disclosed for illustrative purpose, those skilled in the art will appreciate that various modifications, additions and substitutions are possible, without departing from the scope of the invention as disclosed in the accompanying claims.

## Claims

1. Alkali free glass comprised, in weight percent, of about 57-61% SiO₂, 16-18% Al₂O₃, 8-11% B₂O₃, 3-4.5% CaO, 1-5% SrO, 5-8% BaO, 0.1-3% ZnO, being substantially free from alkali metallic oxides and MgO.

2. Alkali free glass according to claim 1, wherein the glass has the properties of a strain point 660°C or more.

3. Alkali free glass according to claim 1 or 2, wherein the glass has the properties of a coefficient of thermal expansion 38 X 10⁻⁷/°C or less.

4. Alkali free glass according to claim 1 or 2, wherein the glass has the properties of a density 2.6g/cm³ or less.

## Patentansprüche

1. Alkalifreies Glas, umfassend etwa 57 bis 61 Gew.% SiO₂, 16 bis 18 Gew.% Al₂O₃, 8 bis 11 Gew.% B₂O₃, 3 bis 4,5 Gew.% CaO, 1 bis 5 Gew.% SrO, 5 bis 8 Gew.% BaO und 0,1 bis 3 Gew.% ZnO, wobei das Glas im Wesentlichen keine Alkalimetalloxide und MgO enthält.

2. Alkalifreies Glas nach Anspruch 1, wobei die untere Kühltemperatur des Glases 660°C oder mehr beträgt.

3. Alkalifreies Glas nach Anspruch 1 oder 2, wobei der thermische Ausdehnungskoeffizient des Glases 38 x 10⁻⁷/°C oder weniger beträgt.

4. Alkalifreies Glas nach Anspruch 1 oder 2, wobei die Dichte des Glases 2,6 g/cm³ oder weniger beträgt.

## Revendications

1. Verre exempt de métaux alcalins comprend, en pourcentage en poids, environ 57 à 61 % de SiO₂, 16 à 18 % de Al₂O₃, 8 à 11 % de B₂O₃, 3 à 4,5 % de CaO, 1 à 5 % de SrO, 5 à 8 % de BaO, 0,1 à 3 % de ZnO, étant sensiblement exempt d'oxydes métalliques alcalins et de MgO.

2. Verre exempt de métaux alcalins selon la revendication 1, dans lequel le verre possède les caractéristiques d'un point de trempe égal ou supérieur à 660°C.

3. Verre exempt de métaux alcalins selon la revendication 1 ou 2, dans lequel le verre possède les caractéristiques d'un coefficient de dilatation thermique égal ou inférieur à 38 x 10⁻⁷/°C.

4. Verre exempt de métaux alcalins selon la revendication 1 ou 2, dans lequel le verre possède les caractéristiques d'une densité égale ou inférieure à 2,6 g/cm³.
